# EUROPÄISCHE PATENTSCHRIFT

(11) **EP 3 018 013 B1**
(45) Veröffentlichungstag und Bekanntmachung des Hinweises auf die Patenterteilung: **12.12.2018**
(21) Anmeldenummer: 15003078.1
(22) Anmeldetag: 28.10.2015
(51) Int. Cl.: B60R 21/2165, B60R 13/00

(54) **EMBLEMBAUGRUPPE ZUR VERBINDUNG MIT EINER GASSACKABDECKUNG, GASSACKABDECKUNG, GASSACKMODUL UND FAHRZEUGLENKRAD MIT EINER DERARTIGEN EMBLEMBAUGRUPPE**
EMBLEM ASSEMBLY FOR CONNECTION TO AN AIRBAG COVER, AIRBAG COVER, AIRBAG MODULE AND VEHICLE STEERING WHEEL WITH SUCH AN EMBLEM ASSEMBLY
MODULE EMBLÈME DESTINÉ À RELIER UN COUVERCLE DE COUSSIN DE SÉCURITÉ GONFLABLE, COUVERCLE DE COUSSIN DE SÉCURITÉ GONFLABLE, MODULE DE COUSSIN DE SÉCURITÉ GONFLABLE ET VOLANT DE VÉHICULE DOTÉ D'UN TEL MODULE EMBLÈME

(30) Priorität: 05.11.2014 DE 202014008757 U
(43) Veröffentlichungstag der Anmeldung: 11.05.2016
(73) Patentinhaber: Dalphi Metal España, S.A., 36213 Vigo (ES)
(72) Erfinder: Barros Alonso, Ruben, 36215 Vigo (ES)
(74) Vertreter: ZF TRW Patentabteilung

(56) Entgegenhaltungen:
- EP-A1- 1 873 016
- US-A- 5 851 022
- US-A1- 2005 067 815

## Beschreibung

Die Erfindung betrifft eine Emblembaugruppe zur Verbindung mit einer Gassackabdeckung gemäß dem Oberbegriff des Anspruchs 1. Ferner betrifft die Erfindung eine Gassackabdeckung, ein Gassackmodul und ein Fahrzeuglenkrad mit einer solchen Emblembaugruppe. Eine Emblembaugruppe der eingangs genannten Art ist beispielsweise aus US 7,775,550 B2 bekannt.

Die aus dem Stand der Technik bekannte Emblembaugruppe umfasst ein Emblem und eine Halteplatte, wobei das Emblem mehrteilig ausgebildet ist. Insbesondere umfasst das Emblem mehrere einzelne Dekorelemente, die jeweils Befestigungsstifte umfassen. Die Befestigungsstifte erstrecken sich im montierten Zustand durch die Gassackabdeckung und sind auf einer rückwärtigen Seite der Gassackabdeckung in einer Halteplatte fixiert. Nachteilig bei der bekannten Emblembaugruppe ist der Materialaufwand für die Dekorelemente. Diese sind oft aus einem vergleichsweise hochwertigen Material, beispielsweise Aluminium, gefertigt, um ein ästhetisch ansprechendes Erscheinungsbild zu erreichen. Insgesamt weist also die bekannte Emblembaugruppe einen relativ hohen Anteil hochwertiger Materialien auf, was zu erhöhten Materialkosten führt.

Die Aufgabe der Erfindung besteht darin, eine Emblembaugruppe anzugeben, die ein hochwertiges Erscheinungsbild behält und gleichzeitig mit reduzierten Materialkosten herstellbar ist. Ferner besteht die Aufgabe der Erfindung darin, eine Gassackabdeckung, ein Gassackmodul sowie ein Fahrzeuglenkrad mit einer solchen Emblembaugruppe anzugeben..

Erfindungsgemäß wird diese Aufgabe im Hinblick auf die Emblembaugruppe durch den Gegenstand des Anspruchs 1, im Hinblick auf die Gassackabdeckung durch den Gegenstand des Anspruchs 11, im Hinblick auf das Gassackmodul durch den Gegenstand des Anspruchs 13, im Hinblick auf das Fahrzeuglenkrad durch den Gegenstand des Anspruchs 14 gelöst.

Insbesondere wird die Aufgabe gelöst durch eine Emblembaugruppe zur Verbindung mit einer Gassackabdeckung, die ein Emblem und eine Halteplatte aufweist. Das Emblem und die Halteplatte können miteinander klippverbindbar sein, wobei das Emblem Positionierstifte umfasst, die mit Positionieraufnahmen der Halteplatte bzw. eines Halteelements untrennbar verbindbar sind.

Das Emblem kann ein Dekorelement und ein Trägerelement aufweisen, die (insbesondere dauerhaft) miteinander verbindbar bzw. verbunden sind.

Auch können Dekorelement und Trägerelement einstückig ausgebildet sein, also insbesondere aus einem, vorzugsweise mit einer Metallschicht überzogenen, Kunststoffmaterial geformt sein und so das Emblem oder einen Teil des Emblems formen.

Ferner können Dekorelement und Trägerelement ein Logobauteil (14) bilden, das innerhalb eines Designbauteils (15) des Emblems (10) anordenbar ist.

Dabei kann das Trägerelement die Positionierstifte umfassen. Auch das Designbauteil kann eine Mehrzahl von, vorzugsweise zwei, drei, vier, fünf oder sechs, Positionierstifte aufweisen, die mit Positionieraufnahmen der Halteplatte untrennbar verbindbar sind.

Bei der Erfindung wird also in vorteilhafter Weise das Emblem in mehrteiliger Form ausgeführt, wobei insbesondere eine Unterteilung in ein Dekorelement und ein Trägerelement und/ oder ein Designbauteil erfolgt. Dabei umfasst das Trägerelement und/ oder das Designbauteil die Positionierstifte. Die Positionierstifte dienen wenigstens zur Positionierung des Emblems bezüglich der Halteplatte. Zudem können die Positionierstifte als Klippverbinder ausgebildet ein und so auch zur Verbindung des Emblems mit der Halteplatte dienen, Entsprechend können die Positionieraufnahmen als Klippaufnahmen ausgebildet sein. Das Dekorelement sorgt hingegen für ein optisch ansprechendes Erscheinungsbild der Emblembaugruppe. Durch diese Funktionstrennung zwischen optischem Erscheinungsbild und Befestigungsfunktion ist es möglich, den Materialaufwand für hochwertige Materialien, die zur Bildung des Dekorelements eingesetzt werden können, zu reduzieren. Insbesondere wird auf diese Weise vermieden, die Positionierstifte aus einem relativ hochwertigen Material herstellen zu müssen, wie es beim Stand der Technik der Fall ist. Vielmehr kann das Trägerelement aus einem kostengünstigen Material gebildet sein, wodurch sich insgesamt die Herstellungskosten für die Emblembaugruppe reduzieren lassen,

Dabei ist es bevorzugt, wenn das Dekorelement ein anderes Material als das Trägerelement aufweist. Durch die Verwendung verschiedener Materialien wird der Kostenvorteil besonders effizient genutzt. Insbesondere kann vorgesehen sein, dass das Dekorelement ein hochwertigeres Material aufweist als das Trägerelement. Beispielsweise kann das Dekorelement durch ein Aluminiumblech gebildet sein.

Das Dekorelement kann in bevorzugten Ausführungsformen mit dem Trägerelement verklebt sein. Die Verklebung ermöglicht eine besonders einfache und feste Verbindung zwischen dem Dekorelement und dem Trägerelement, so dass insgesamt ein einheitlich handhabbares Emblem gebildet ist.
Alternativ kann das Dekorelement auch mit dem Trägerelement verkrimpt, verklemmt, verpresst oder verrastet sein. Insbesondere kann das Trägerelement mit dem Dekorelement gemeinsam ein Logobauteil bilden, das innerhalb eines Designbauteils des Emblems anordenbar ist.

Im Allgemeinen kann das Emblem aus mehreren Einzelkomponenten gebildet sein. Insbesondere ist bevorzugt, wenn das Dekorelement mit dem Trägerelement ein einheitlich handhabbares Logobauteil bildet, das wiederum mit einem Designbauteil des Emblems verbindbar ist. Die einzelnen Bauteile, insbesondere das Logobauteil und das Designbauteil, können derart fest miteinander verbindbar sein, dass insgesamt ein einheitlich handhabbares Emblem gebildet ist.

Das mehrteilige Emblem ist gemäß einem optional-zusätzlichen Aspekt der Erfindung derart gestaltet, dass es als eine Baugruppe (in einem Arbeitsschritt) mit der Halteplatte verbindbar ist.

Dabei können das Designbauteil und das Dekorelement aus jeweils hochwertigen Materialien gebildet sein. Es ist auch möglich, dass das Designbauteil selbst durch ein Dekorelement und ein Trägerelement gebildet ist. Das Designbauteil kann auch durch ein oberflächlich verchromtes Kunststoffteil gebildet sein.

In einer bevorzugten Ausführungsform weist das Designbauteil zwei Logoaufnahmen auf, in die das Logobauteil einsetzbar ist. Dies stellt eine formschlüssige Verbindung zwischen dem Designbauteil und dem Logobauteil sicher. Konkret können die Logoaufnahmen zu einer Vorderseite des Emblems begrenzt sein, so dass das Logobauteil durch das Designbauteil an der Halteplatte fixierbar ist. Dabei kann das Designbauteil Klippverbinder umfassen, die mit Klippaufnahmen der Halteplatte zur Fixierung des Emblems an der Halteplatte und/oder an der Gassackabdeckung zusammenwirken. Mit anderen Worten kann das Designbauteil das Logobauteil teilweise überlappen, so dass das Logobauteil zusätzlich zur Befestigung durch die Positionierstifte oder ausschließlich durch das Designbauteil an der Halteplatte gehalten wird. Das Designbauteil kann jedenfalls als Niederhalter für das Logobauteil dienen.

Das Designbauteil kann ringförmig ausgebildet sein. Dabei ist vorteilhaft vorgesehen, dass die Logoaufnahmen auf einem Innenumfang des Designbauteils angeordnet sind. Das Logobauteil kann sich radial durch das Designbauteil erstrecken und jeweils in die gegenüberliegend angeordneten Logoaufnahmen des Designbauteils eingreifen. Eine andere Ausrichtung der Logoaufnahmen, beispielsweise in einem Winkel bezogen auf den Mittelpunkt des ringförmigen Designbauteils, ist möglich. Ebenso ist möglich, zwei, drei oder vier Logoaufnahmen (16) vorzusehen, in die das Logobauteil (14) einsetzbar ist.

In einer weiteren bevorzugten Variante der erfindungsgemäßen Emblembaugruppe ist vorgesehen, dass das Dekorelement eine kappenartige Form aufweist und die kappenartige Form vier Seitenfläche und eine Frontfläche umfasst, Das Dekorelement umgreift insofern das Trägerelement auf mehreren Seiten, so dass das Trägerelement von einer Vorderseite des Emblems nicht mehr erkennbar ist. Das Trägerelement wird vielmehr kappenartig von dem Dekorelement umschlossen. Insbesondere kann das Trägerelement derart in das kappenartige Dekorelement eingebettet sein, dass lediglich eine Rückfläche des Trägerelements frei liegt. Die Rückfläche liegt im montierten Zustand an der Gassackabdeckung an und ist so von außen nicht mehr erkennbar.

Die Halteplatte, die im montierten Zustand der Emblembaugruppe vorzugsweise auf einer Rückseite der Gassackabdeckung angeordnet ist, kann wenigstens eine Sollbruchlinie aufweisen. Insbesondere kann vorgesehen sein, dass sich durch die gesamte Halteplatte hindurch eine oder mehrere Sollbruchlinien erstrecken, die beim Öffnen der Gassackabdeckung nachgeben und so die Freigabe eines unterhalb der Gassackabdeckung angeordneten Gassacks, beispielsweise eines Fahrer-Airbags, erleichtern.
Gemäß einem nebengeordneten Aspekt beruht die Erfindung auf dem Gedanken, eine Gassackabdeckung, insbesondere für ein Lenkrad, mit einer zuvor beschriebenen Emblembaugruppe anzugeben. Dabei ist die Emblembaugruppe vorzugsweise mit einer Frontplatte der Gassackabdeckung verbunden. Die Frontplatte kann in einer bevorzugten Ausführungsform der erfindungsgemäßen Gassackabdeckung eine Reißlinie aufweisen. Die Reißlinie ermöglicht die Freigabe eines Gassacks, der unterhalb der Gassackabdeckung anordenbar ist. Dabei ist es besonders bevorzugt, wenn die Halteplatte der Emblembaugruppe derart an der Frontplatte angeordnet ist, dass die Sollbruchlinie der Halteplatte entlang der Reißlinie der Frontplatte ausgerichtet ist bzw. mit der Reißlinie fluchtet. Damit ist sichergestellt, dass sich die Gassackabdeckung einschließlich der Halteplatte bzw. der Emblembaugruppe, teilen lässt, um einen Gassack nach dessen Aktivierung freizugeben.
Ein weiterer nebengeordneter Aspekt der Erfindung betrifft ein Gassackmodul mit einer zuvor beschriebenen Gassackabdeckung und/oder einer zuvor beschriebenen Emblembaugruppe. Das Gassackmodul kann ferner wenigstens einen Gassack, beispielsweise einen Fahrer-Airbag, sowie einen Gasgenerator aufweisen, der mit dem Gassack in Fluidverbindung steht.
Ein weiterer nebengeordneter Aspekt der Erfindung betrifft ein Fahrzeuglenkrad mit einem solchen Gassackmodul und/oder einer zuvor beschriebenen Gassackabdeckung bzw. einer zuvor beschriebenen Emblembaugruppe.

Im Rahmen der vorliegenden Anmeldung wird lediglich zur Erläuterung ein Verfahren zur Herstellung einer Gassackabdeckung offenbart, wobei folgende Schritte ausgeführt werden: Bilden eines Logobauteils durch Verbinden eines Dekorelements mit einem Trägerelement; Anordnen des Logobauteils in Logo-Ausnehmungen eines Designbauteils zur Bildung eines Emblems; Steckverbinden des Emblems mit der Gassackabdeckung, wobei wenigstens ein Positionierstift des Emblems eine Frontplatte der Gassackabdeckung durchgreift; Aufstecken einer Halteplatte auf das Emblem, so dass die Frontplatte der Gassackabdeckung zwischen dem Emblem und der Halteplatte eingespannt und die Halteplatte unlösbar mit dem Emblem verbunden wird.

Vorzugsweise greifen beim Aufstecken der Halteplatte auf das Emblem die Positionierstifte des Emblems in Positionieraufnahmen der Halteplatte ein, so dass eine Relativposition zwischen dem Emblem und der Halteplatte, insbesondere zwischen dem Emblem und der Gassackabdeckung, festgelegt ist. Die Positionierstifte können auch als Klippverbinder und die Positionieraufnahmen als Klippaufnahmen ausgebildet sein, so dass eine feste Klippverbindung bereitgestellt wird und ein Lösen der Halteplatte von dem Emblem nicht zerstörungsfrei möglich ist.

Die Erfindung wird im Folgenden anhand eines Ausführungsbeispiels unter Bezugnahme auf die beigefügten, schematischen Zeichnungen näher erläutert, Darin zeigen
- Fig. 1:: eine perspektivische Explosionsdarstellung eines Emblems der erfindungsgemäßen Emblembaugruppe nach einem bevorzugten Ausführungsbeispiel;
- Fig. 2:: eine perspektivische Rückansicht des Emblems gemäß Fig. 1 im zusammengesetzten Zustand;
- Fig. 3:: eine perspektivische Frontansicht des Emblems gemäß Fig. 1 und 2; und
- Fig. 4:: eine perspektivische Vorderansicht einer Halteplatte der erfindungsgemäßen Emblembaugruppe, die mit dem Emblem gemäß Fig. 2 verbindbar ist.

In den beigefügten Zeichnungen ist eine Emblembaugruppe beschrieben, die im Allgemeinen durch ein Emblem 10 und eine Halteplatte 20 gebildet ist. Das Emblem 10 umfasst mehrere Bauteile, insbesondere ein Logobauteil 14 und ein Designbauteil 15. Das Logobauteil 14 ist wiederum durch ein Dekorelement 12 und ein Trägerelement 13 gebildet. Insgesamt ist das Emblem 10 der Emblembaugruppe mehrteilig ausgebildet. Zur Verbindung mit der Halteplatte 20 weist das Emblem 10 Klippverbinder 11 auf, die in entsprechende Klippaufnahmen 21 der Halteplatte 20 eingreifen können, um das Emblem 10 mit der Halteplatte 20 fest zu verbinden. Die Klippverbinder 11 sind vorzugsweise am Designbauteil 15 angeordnet. Am Logobauteil 14 sind Positionierstifte 17 angeordnet, die mit Positionieraufnahmen 23 der Halteplatte 20 zusammenwirken, um eine exakte Positionierung des Logobauteils 14 zum Designbauteil 15 zu erreichen. Die Positionierstifte 17 und Positionieraufnahmen 23 können auch eine Klippverbindung bereitstellen, d.h. als Klippverbinder 11 und Klippaufnahmen 12 ausgebildet sein.

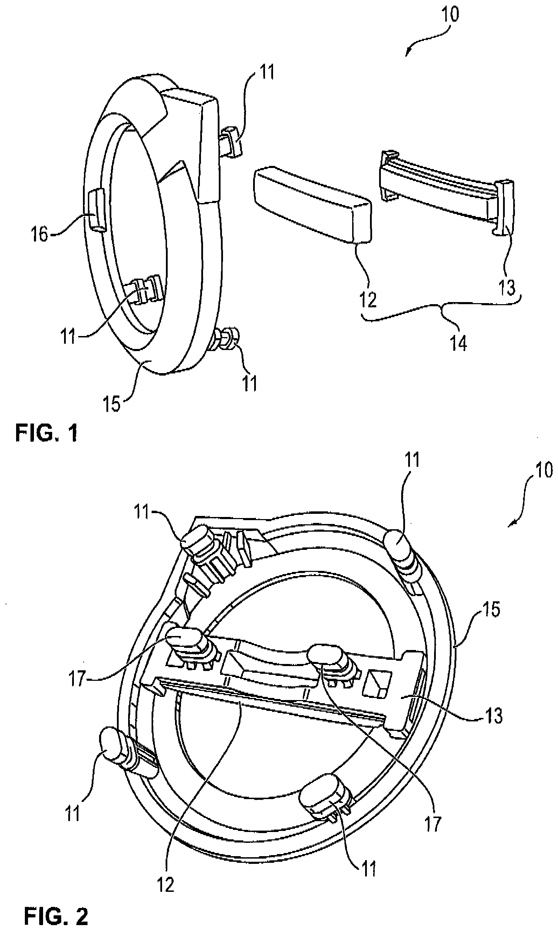

In Fig. 1 sind die einzelnen Elemente des Emblems 10 dargestellt. Insbesondere ist erkennbar, dass das Emblem 10 das Designbauteil 15 aufweist, das im Wesentlichen ringförmig ausgebildet ist. Das Designbauteil 15 kann aus einem Kunststoffmaterial gebildet sein, das mit einer Chromschicht versehen ist, um das optische Erscheinungsbild des Designbauteils 15 zu verbessern. Das Designbauteil 15 weist auf einer rückwärtigen Seite Klippverbinder 11 auf, die eine komplementär zu Klippaufnahmen 21 der Halteplatte 20 angeordnet sind. Ferner ist in Fig. 1 erkennbar, dass auf einem Innenumfang des Designbauteils 15 Logoaufnahmen 16 angeordnet sind. Insbesondere sind zwei Logoaufnahmen 16 vorgesehen, die radial gegenüberliegend auf einem Innenumfang des Designbauteils 15 angeordnet sind. Die Logoaufnahmen 16 sind zu einer Rückseite des Designbauteils 15 offen und zu einer Vorderseite des Designbauteils 15 begrenzt. Die Form der Logoaufnahmen 16 entspricht im Wesentlichen der Querschnittsform des Logobauteils 14, so dass eine formschlüssige Aufnahme des Logobauteils 14 in das Designbauteil 14 ermöglicht ist.

Das Logobauteil 14 umfasst ein Dekorelement 12 und ein Trägerelement 13. Das Dekorelement 12 und das Trägerelement 13 sind vorzugsweise aus unterschiedlichen Materialien gefertigt. Beispielsweise kann das Trägerelement 13 einen Kunststoff umfassen und das Dekorelement 12 durch ein Aluminiumblechteil gebildet sein. Das Dekorelement 12 trägt vorzugsweise das Logo oder die Marke eines Fahrzeugherstellers. In der Explosionsdarstellung gemäß Fig. 1 ist der Aufbau des Emblems 10 gut erkennbar. Insbesondere ist verdeutlicht, dass das Logobauteil 14 aus dem Dekorelement 12 einerseits und dem Trägerelement 13 andererseits aufgebaut ist. Das Dekorelement 12 weist eine kappenartige Form mit einer Frontfläche, die das Fahrzeugherstellerlogo trägt, und vier Seitenflächen auf. Das Trägerelement 13 ist derart geformt, dass es in das Dekorelement 12 eingesetzt werden kann, so dass das Dekorelement 12 das Trägerelement 13 auf fünf Seiten umgreift. Die Rückseite des Trägerelements 13 bleibt frei.

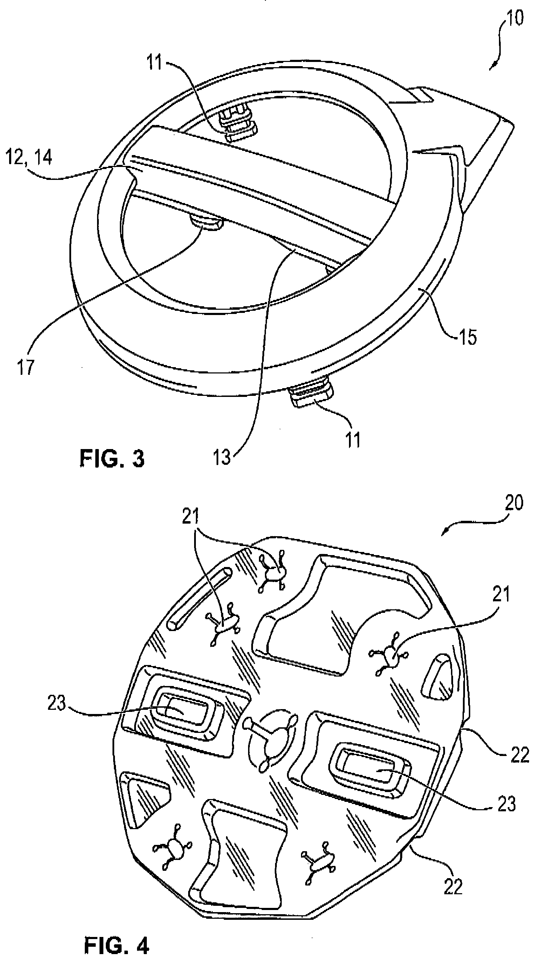

Wie in Fig. 2 gut erkennbar ist, weist das Trägerelement 13 auf seiner Rückseite Positionierstifte 17 auf, die im Wesentlichen oval ausgebildet sind und in entsprechende Positionieraufnahmen 18 der Halteplatte 20 eingreifen können. Die Halteplatte 20 mit ihren Positionieraufnahmen 23 sowie Klippaufnahmen 21 ist beispielhaft in Fig. 4 gezeigt. Ferner ist in Fig. 2 erkennbar, dass das Designbauteil 15 mehrere Klippverbinder 11 trägt, deren Position mit den Positionen von Klippaufnahmen 21 der Halteplatte 20 abgestimmt ist.

Fig. 3 zeigt das Emblem 10 im montierten Zustand. Es ist deutlich zu erkennen, dass durch die mehrteilige Ausbildung des Emblems eine Vielzahl von Gestaltungsmöglichkeiten existiert. Beispielsweise können das Material des Designbauteils 15 und des Dekorelements 12 unterschiedlich gewählt werden, um ein entsprechend gewünschtes Erscheinungsbild wiederzugeben. Es ist auch möglich, dass das Designbauteil 15 und das Dekorelement 12 unterschiedliche Farben wiedergeben, so dass ein mehrfarbiges Emblem 10 mit einfachen Mitteln hergestellt werden kann.

In Fig. 4 ist die Halteplatte 20 dargestellt, die mehrere, teilweise unregelmäßig verteilte, Klippaufnahmen 21 aufweist, Die Klippaufnahmen 21 sind derart ausgerichtet, dass die Klippverbinder 11 des Emblems 10 in die Klippaufnahmen 21 eingreifen können. Die Klippaufnahmen 21 sind so gestaltet, dass ein Lösen der Verbindung zwischen der Halteplatte 20 und dem Emblem 10 nicht zerstörungsfrei möglich ist. Mittig sind in der Halteplatte 10 die Positionieraufnahmen 23 angeordnet, in welche die Positionierstifte 17 eingreifen können, um eine exakte Ausrichtung des Emblems 10 zur Halteplatte 20 zu erreichen. Die Positionieraufnahmen 23 können ähnlich wie die Klippaufnahmen 21 gestaltet sein. Entsprechend können die Positionierstifte 17 ähnlich wie die Klippverbinder 11 gestaltet sein, so dass die Positionierstifte 17 in die Positionieraufnahmen 23 einrasten können, um das Logobauteil 14 mit der Halteplatte 20 fest zu verbinden. Generell ist jedoch vorgesehen, das Logobauteil 14 indirekt über das Designbauteil 15 an der Halteplatte 20 zu fixieren, wobei das Logobauteil 14 in den Logoaufnahmen 16 des Designbauteil 15 angeordnet ist. Das Designbauteil 15 bildet so einen Niederhalter für das Logobauteil 14.

Ferner ist in der perspektivischen Darstellung gemäß Fig. 4 angedeutet, dass die Halteplatte 20 zwei Sollbruchlinien 22 umfasst, die auf einer Rückseite der Halteplatte 20 ausgebildet sind. Die Sollbruchlinien 22 können an einer Gassackabdeckung mit einer Reißlinie der Gassackabdeckung fluchtend angeordnet werden, so dass die Halteplatte 20 bricht, wenn sich die Gassackabdeckung zum Entfalten eines Gassacks, beispielsweise eines Airbags, öffnet. In diesem Zusammenhang ist es ebenfalls vorteilhaft, wenn auch das Emblem 10, insbesondere das Designbauteil 15, brechbar ausgebildet ist.

### Bezugszeichenliste

- 10: Emblem
- 11: Klippverbinder
- 12: Dekorelement
- 13: Trägerelement
- 14: Logobauteil
- 15: Designbauteil
- 16: Logoaufnahme
- 17: Positionierstift

- 20: Halteplatte
- 21: Klippaufnahme
- 22: Sollbruchlinie
- 23: Positionieraufnahme

## Patentansprüche

1. Emblembaugruppe zur Verbindung mit einer Gassackabdeckung,
wobei die Emblembaugruppe ein Emblem (10) und eine Halteplatte (20) aufweist, die miteinander klippverbindbar sind,
wobei das Emblem Positionierstifte (11, 17) umfasst, die mit Positionieraufnahmen (21, 23) der Halteplatte (20) untrennbar verbindbar sind, und
wobei das Emblem (10) ein Dekorelement (12) und ein Trägerelement (13) aufweist,
wobei das Trägerelement (13) die Positionierstifte (17) umfasst und mit dem Dekorelement (12), vorzugsweise dauerhaft, verbindbar oder verbunden ist,
**dadurch gekennzeichnet, dass** das Dekorelement (12) ein anderes Material als das Trägerelement (13) aufweist.

2. Emblembaugruppe nach Anspruch 1, **dadurch gekennzeichnet, dass** das Dekorelement (12) durch ein gestaltetes Metall, vorzugsweise Aluminium, insbesondere ein Aluminiumblech, gebildet ist, und/oder wobei vorzugsweise das Trägerelement (13) aus einem Kunststoffmaterial gebildet ist.

3. Emblembaugruppe nach einem der vorhergehenden Ansprüche, **dadurch gekennzeichnet, dass** das Dekorelement (12) mit dem Trägerelement (13) verklebt, verkrimpt, verklemmt, verpresst, oder verrastet ist.

4. Emblembaugruppe nach einem der vorhergehenden Ansprüche, **dadurch gekennzeichnet, dass** das Trägerelement (13) mit dem Dekorelement (12) ein Logobauteil (14) bildet, das innerhalb eines Designbauteils (15) des Emblems (10) anordenbar ist.

5. Emblembaugruppe nach Anspruch 1, **dadurch gekennzeichnet, dass** das Trägerelement (13) und das Dekorelement (12) einstückig, vorzugsweise aus einem, insbesondere mit einer Metallschicht überzogenen, Kunststoffmaterial, ausgebildet sind und ein Logobauteil (14) bilden, das innerhalb eines Designbauteils (15) des Emblems (10) anordenbar ist.

6. Emblembaugruppe nach Anspruch 5, **dadurch gekennzeichnet, dass** das Designbauteil (15) eine Mehrzahl von, vorzugsweise zwei, drei oder vier Logoaufnahmen (16) aufweist, in die das Logobauteil (14) einsetzbar ist und/oder dass das Designbauteil (15) eine Mehrzahl von, vorzugsweise zwei, drei oder vier, Positionierstifte (11) umfasst, die mit Positionieraufnahmen (21) der Halteplatte (20) untrennbar verbindbar sind.

7. Emblembaugruppe nach Anspruch 6, **dadurch gekennzeichnet, dass** die Logoaufnahmen (16) zu einer Vorderseite des Emblems (10) begrenzt sind, so dass das Logobauteil (14) durch das Designbauteil (15) an der Halteplatte (20) fixierbar ist.

8. Emblembaugruppe nach Anspruch 6 oder 7, **dadurch gekennzeichnet, dass** das Designbauteil (15) ringförmig ausbildet ist und die Logoaufnahmen (16) auf einem Innenumfang des Designbauteils (15) angeordnet sind.

9. Emblembaugruppe nach einem der vorhergehenden Ansprüche, **dadurch gekennzeichnet, dass** das Dekorelement (12) eine kappenartige Form mit vier Seitenflächen und einer Frontfläche aufweist.

10. Emblembaugruppe nach einem der vorhergehenden Ansprüche, **dadurch gekennzeichnet, dass** die Halteplatte (20) wenigstens eine Sollbruchlinie (22) aufweist.

11. Gassackabdeckung, insbesondere für ein Lenkrad, mit einer Emblembaugruppe nach einem der vorhergehenden Ansprüche, wobei die Emblembaugruppe mit einer Frontplatte der Gassackabdeckung verbunden ist.

12. Gassackabdeckung nach Anspruch 11, **dadurch gekennzeichnet, dass** die Frontplatte eine Reißlinie aufweist, wobei die Sollbruchlinie der Halteplatte (20) entlang der Reißlinie ausgerichtet ist bzw. mit der Reißlinie fluchtet.

13. Gassackmodul mit einer Gassackabdeckung und/oder einer Emblembaugruppe nach einem der vorhergehenden Ansprüche.

14. Fahrzeuglenkrad mit einem Gassackmodul und/oder einer Gassackabdeckung und/oder einer Emblembaugruppe nach einem der vorhergehenden Ansprüche.

## Claims

1. An emblem assembly for being connected to an airbag cover,
wherein the emblem assembly comprises an emblem (10) and a retaining plate (20) which can be clip-connected to each other,
wherein the emblem comprises positioning pins (11, 17) which can be connected non-detachably to positioning seats (21, 23) of the retaining plate (20), and
wherein the emblem (10) includes a decorative element (12) and a carrier element (13),
wherein the carrier element (13) comprises the positioning pins (17) and is connectable or connected, preferably permanently, to the decorative element (12),
**characterized in that** the decorative element (12) includes a material different from that of the carrier element (13).

2. The emblem assembly according to claim 1, **characterized in that** the decorative element (12) is formed by a designed metal, preferably aluminum, in particular an aluminum sheet, and/or wherein the carrier element (13) is preferably formed of plastic material.

3. The emblem assembly according to any one of the preceding claims, **characterized in that** the decorative element (12) is glued, crimped, clamped, pressed or locked with the carrier element (13).

4. The emblem assembly according to any one of the preceding claims, **characterized in that** the carrier element (13) together with the decorative element (12) forms a logo component (14) capable of being arranged inside a design component (15) of the emblem (10).

5. The emblem assembly according to claim 1, **characterized in that** the carrier element (13) and the decorative element (12) are formed in one piece, preferably of plastic material which is especially coated with a metallic layer, and constitute a logo component (14) capable of being arranged inside a design component (15) of the emblem (10).

6. The emblem assembly according to claim 5, **characterized in that** the design component (15) includes a plurality of, preferably two, three or four logo seats (16) into which the logo component (14) can be inserted and/or **characterized in that** the design component (15) includes a plurality of, preferably two, three or four, positioning pins (11) which are connectable non-detachably to positioning seats (21) of the retaining plate (20).

7. The emblem assembly according to claim 6, **characterized in that** the logo seats (16) are limited toward a front side of the emblem (10) so that the logo component (14) can be fixed to the retaining plate (20) by the design component (15).

8. The emblem assembly according to claim 6 or 7, **characterized in that** the design component (15) has an annular shape and the logo seats (16) are arranged on an inner periphery of the design component (15).

9. The emblem assembly according to any one of the preceding claims, **characterized in that** the decorative element (12) has a cap-like shape with four side faces and one front face.

10. The emblem assembly according to any one of the preceding claims, **characterized in that** the retaining plate (20) includes at least one predetermined breaking line (22).

11. An airbag cover, in particular for a steering wheel, comprising an emblem assembly according to any one of the preceding claims, wherein the emblem assembly is connected to a front plate of the airbag cover.

12. The airbag cover according to claim 11, **characterized in that** the front panel includes a tear line, wherein the predetermined breaking line of the retaining plate (20) is aligned along the tear line or aligned with the tear line.

13. An airbag module comprising an airbag cover and/or an emblem assembly according to any one of the preceding claims.

14. A vehicle steering wheel comprising an airbag module and/or an airbag cover and/or an emblem assembly according to any one of the preceding claims.

## Revendications

1. Ensemble emblème pour la connexion au couvercle d'un airbag,
pour lequel l'ensemble emblème comprend un emblème (10) et une plaque de retenue (20) qui peuvent être reliés par clipsage l'un à l'autre,
pour lequel l'emblème comprend des broches de positionnement (11, 17), qui peuvent être connectées de manière inséparable avec les réceptacles de positionnement (21, 23) de la plaque de retenue (20), et
pour lequel l'emblème (10) comporte un élément décoratif (12) et un élément porteur (13),
pour lequel l'élément porteur (13) comprend les broches de positionnement (17) et est connecté ou est connectable à l'élément décoratif (12), de préférence de manière permanente,
**caractérisé en ce que** l'élément décoratif (12) comprend un matériau différent de celui de l'élément porteur (13).

2. Ensemble emblème selon la revendication 1, **caractérisé en ce que** l'élément décoratif (12) est formé d'un métal façonné, de préférence de l'aluminium, en particulier une feuille d'aluminium, et/ou pour lequel, de préférence, l'élément porteur (13) est formé d'un matériau plastique.

3. Ensemble emblème selon l'une quelconque des revendications précédentes, **caractérisé en ce que** l'élément décoratif (12) est collé, serti, coincé, pressé ou verrouillé avec l'élément porteur (13).

4. Ensemble emblème selon l'une quelconque des revendications précédentes, **caractérisé en ce que** l'élément porteur (13) forme avec l'élément décoratif (12) une pièce logo (14), qui peut être agencée à l'intérieur d'une pièce de style (15) de l'emblème (10).

5. Ensemble emblème selon la revendication 1, **caractérisé en ce que** l'élément porteur (13) et l'élément décoratif (12) sont formés en une seule pièce, de préférence de matière plastique revêtue d'une couche métallique, et forment un élément de logo (14), qui peut être agencée à l'intérieur d'une pièce de style (15) de l'emblème (10).

6. Ensemble emblème selon la revendication 5, **caractérisé en ce que** la pièce de style (15) comporte plusieurs, de préférence deux, trois ou quatre réceptacles de logo (16) dans lesquels le composant de logo (14) peut être inséré et/ou la pièce de style (15) comporte une pluralité, de préférence deux, trois ou quatre broches de positionnement (11), qui peuvent être connectées de manière inséparable avec des réceptacles de positionnement (21) de la plaque de retenue (20).

7. Ensemble emblème selon la revendication 6, **caractérisé en ce que** les réceptacles de logo (16) sont limités à un côté avant de l'emblème (10), de sorte que la pièce logo (14) peut être fixé par la pièce de style (15) sur la plaque de maintien (20).

8. Ensemble emblème selon la revendication 6 ou 7, **caractérisé en ce que** la pièce de style (15) est annulaire et les réceptacles de logo (16) sont agencés sur une circonférence interne de la pièce de style (15).

9. Ensemble emblème selon l'une quelconque des revendications précédentes, **caractérisé en ce que** l'élément décoratif (12) présente une forme de carton épais avec quatre surfaces latérales et une surface avant.

10. Ensemble emblème selon l'une quelconque des revendications précédentes, **caractérisé en ce que** la plaque de maintien (20) présente au moins une ligne de rupture prédéterminée (22).

11. Couvercle d'airbag, en particulier pour un volant de direction, avec un ensemble emblème selon l'une des revendications précédentes, pour lequel l'ensemble emblème est relié à une plaque avant du couvercle d'airbag.

12. Couvercle d'airbag selon la revendication 11, **caractérisé en ce que** la plaque avant possède une ligne de déchirure, pour lequel la ligne de rupture de plaque de maintien (20) est alignée le long de la ligne de déchirure respectivement alignée avec la ligne de déchirure.

13. Module airbag avec un couvercle d'airbag et/ou un ensemble emblème selon une des revendications précédentes.

14. Volant de direction de véhicule avec un module airbag et/ou un couvercle d'airbag et/ou un ensemble emblème selon une des revendications précédentes.
